# EUROPEAN PATENT SPECIFICATION

(11) **EP 4 354 011 B1**
(45) Date of publication and mention of the grant of the patent: **09.12.2026**
(21) Application number: 22820293.3
(22) Date of filing: 09.06.2022
(51) Int. Cl.: F17C 1/06

(54) **PRESSURE ACCUMULATOR**
DRUCKSPEICHER
ACCUMULATEUR DE PRESSION

(30) Priority: 10.06.2021 JP 2021097183
(43) Date of publication of application: 17.04.2024
(73) Proprietor: JFE Steel Corporation, Tokyo 100-0011 (JP)
(72) Inventor: TAKANO, Toshio, Tokyo 101-0064 (JP); OKANO, Hiroshi, Tokyo 100-0011 (JP); TAKAGI, Shusaku, Tokyo 100-0011 (JP)
(74) Representative: Haseltine Lake Kempner LLP
(86) International application number: PCT/JP2022/023230
(87) International publication number: WO 2022/260114

(56) References cited:
- WO-A1-2017/150520
- GB-A- 2 277 370
- JP-A- 2015 158 243
- JP-A- 2017 141 919
- JP-A- 2020 056 457
- JP-B2- 6 725 485
- US-A- 1 732 235
- US-A1- 2007 193 647
- US-A1- 2014 158 250
- US-A1- 2020 340 625
- US-A1- 2021 018 144

## Description

### Technical Field

The present invention relates to a pressure accumulator that stores vaporized liquefied gas.

### Background Art

Conventionally, there are various known pressure accumulators that store vaporized liquefied gas therein, and that are already put into practice. In general, liquefied hydrogen that is carried by a liquid hydrogen lorry and that is stored in a storage tank is vaporized by a vaporizer, and is compressed by a compressor into a high pressure and, thereafter, is injected into a pressure accumulator through a pipe. A hydrogen gas pressure accumulator disclosed in the following Patent Literature 1, for example, is configured to include a cylindrical cylinder portion, lid portions, and threaded portions, the cylindrical cylinder portion being made of steel and being configured to store vaporized liquefied gas in the cylindrical cylinder portion, the lid portions being configured to hermetically seal both end portions of the cylindrical cylinder portion in an openable manner, the threaded portions being configured to fix the lid portions to the cylindrical cylinder portion.

### Citation List

### Patent Literature

Patent Literature 1: Japanese Unexamined Patent Application Publication No. 2019-82188

US 2007/193647 A1 relates to a high pressure gas container with an auxiliary valve and process for filling it.

### Summary of Invention

### Technical Problem

Adopting a configuration can be considered in which liquefied gas at a very low temperature is injected into a pressure accumulator from the outside through a pipe, and is vaporized therein and is stored in the pressure accumulator, so that a vaporizer is not necessary. However, in the hydrogen gas pressure accumulator disclosed in Patent Literature 1, although the cylindrical cylinder can withstand only approximately - 30 degrees C, for example, the temperature of liquid hydrogen is approximately -260 degrees C and hence, there is a possibility that the temperature of the lid portion is lowered due to the heat conduction caused by liquid hydrogen at a very low temperature flowing through the pipe, thus lowering the temperature of the cylindrical cylinder to which heat is conducted from the lid portion, causing a brittle fracture in the cylindrical ring.

The present invention has been made to solve the above-mentioned problem, and it is an object of the present invention to provide a pressure accumulator that can vaporize and store liquefied gas without causing a brittle fracture in the cylindrical body even when liquefied gas at a very low temperature is injected into the pressure accumulator from the outside through a pipe.

### Solution to Problem

The present invention is defined by the appended claims.

### Advantageous Effects of Invention

According to the present invention, the gap is provided between the outer peripheral portion of the lid body and the inner peripheral portion of the cylindrical body, and at least a portion of the gap is filled with the sealing structure portion and hence, the gap serves as a heat-insulating layer, thus suppressing heat conduction from the lid body to the cylindrical body and suppressing a brittle fracture in the cylindrical body. Accordingly, by causing liquefied gas at a very low temperature to be injected into the pressure accumulator from the outside through a pipe, it is possible to vaporize and store the liquefied gas.

### Brief Description of Drawings

[Fig. 1] Fig. 1 is a cross-sectional view schematically showing the internal structure of one end of a pressure accumulator according to Embodiment 1.
[Fig. 2] Fig. 2 is a cross-sectional view schematically showing the internal structure of one end of a modification of the pressure accumulator, the modification not according to the present invention.
[Fig. 3] Fig. 3 is a cross-sectional view schematically showing the internal structure of one end of a pressure accumulator according to Embodiment 2.
[Fig. 4] Fig. 4 is a cross-sectional view schematically showing the internal structure of one end of a modification of the pressure accumulator, the modification not according to the present invention.
[Fig. 5] Fig. 5 is a cross-sectional view schematically showing the internal structure of one end of a pressure accumulator according to Embodiment 3.
[Fig. 6] Fig. 6 is a diagram schematically illustrating an end surface of an outer lid body of the pressure accumulator according to Embodiment 3.

### Description of Embodiments

Hereinafter, Embodiments will be described with reference to drawings. In the respective drawings, identical or corresponding components are given the same reference symbols, and the description of such components is omitted or simplified when appropriate. The shapes, the sizes, the arrangement, and the like of the components described in the respective drawings may be suitably changed.

### Embodiment 1.

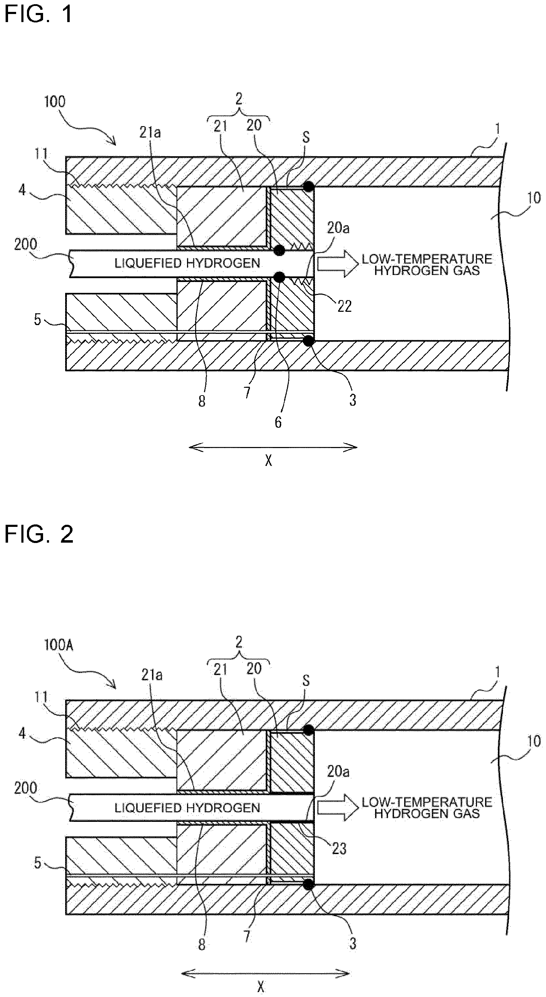

Fig. 1 is a cross-sectional view schematically showing the internal structure of one end of a pressure accumulator according to Embodiment 1. A pressure accumulator 100 according to Embodiment 1 causes liquefied gas at a very low temperature to be injected into the pressure accumulator 100 from the outside through a pipe 200 to vaporize and store the liquefied gas. In Embodiment 1, the description will be made by taking, as an example, the case in which the liquid gas is liquefied hydrogen, for example. Liquefied hydrogen at a very low temperature is at approximately -260 degrees C, for example. The liquid gas is not limited to liquefied hydrogen, and may be liquid nitrogen or liquid helium, for example. In the case in which the liquid gas is liquefied hydrogen, the pressure accumulator 100 is installed at a hydrogen station or the like at which hydrogen is supplied to vehicles, for example.

### (Pressure accumulator 100)

As shown in Fig. 1, the pressure accumulator 100 includes a cylindrical body 1 made of metal, a lid body 2 that closes the opening end portion of the cylindrical body 1, a sealing structure portion 3 provided between the outer peripheral portion of the lid body 2 and the inner peripheral portion of the cylindrical body 1, a fixing part 4 that supports and fixes the lid body 2 from the outer side of the lid body 2, and a temperature detection unit 5.

### (Cylindrical body 1)

The cylindrical body 1 is configured to vaporize liquefied hydrogen in a storage space 10 in the cylindrical body 1 to store hydrogen gas therein. The inner wall surface of the pressure accumulator 100 is a portion that comes into contact with liquefied hydrogen and hydrogen gas. A liquefied gas at a very low temperature is injected into the storage space 10 of the cylindrical body 1 from the outside through the pipe 200. The pipe 200 is made of austenitic stainless steel, for example. The reason is that austenitic stainless steel is excellent in brittleness resistance against liquid hydrogen, and can ensure strength against very low temperatures. Hydrogen gas stored in the storage space 10 of the cylindrical body 1 is supplied to vehicles or the like through a pipe communicating with the outside.

The cylindrical body 1 is made of low alloy steel, for example. Examples of the low alloy steel include chromium-molybdenum steel, nickel-chromium-molybdenum steel, manganese-chromium steel, manganese steel, or boron-added steel. The cylindrical body 1 has a cylindrical shape having both ends open, and a female screw portion 11 is formed on the inner peripheral surface at each of both end portions of the cylindrical body 1. The cylindrical body 1 may have a bottomed cylindrical shape having only one end open, for example. Alternatively, the cylindrical body 1 is not limited to a cylindrical shape, and may have any of other shapes, such as a square cylindrical shape. The outer surface of the cylindrical body 1 may be covered by carbon fiber reinforced plastics (CFRP), being a material other than metal. From the viewpoint of vaporization efficiency, the ratio in wall thickness between a CFRP layer and the cylindrical body 1 (the thickness of the CFRP layer/the thickness of the cylindrical body 1) is preferably 50% or less, and is more preferably 25% or less. The reason is that when the CFRP layer has an excessively large wall thickness, a heat insulating effect becomes conspicuous, thus lowering the vaporization efficiency of liquefied hydrogen.

### (Lid body 2)

The lid body 2 closes the opening end portion of the cylindrical body 1. The lid body 2 is made of austenitic stainless steel, and includes an inner lid body 20 and an outer lid body 21, the inner lid body 20 being disposed at a position close to the storage space 10 of the cylindrical body 1, the outer lid body 21 being made of low alloy steel, and being disposed at a position close to the fixing part 4 of the cylindrical body 1. The inner lid body 20 has a through hole 20a that allows the pipe 200 to penetrate therethrough, and the pipe 200 that penetrates through the through hole 20a is fixed to the inner lid body 20. The outer lid body 21 has a through hole 21a that allows the pipe 200 to penetrate therethrough.

The inner lid body 20 faces the storage space 10 of the cylindrical body 1, and is always in a state of being exposed to liquid hydrogen at a very low temperature. However, the inner lid body 20 is made of austenitic stainless steel, thus being excellent in brittleness resistance against liquid hydrogen, and ensuring strength against very low temperatures. Provided that the inner lid body 20 is excellent in brittleness resistance against liquid hydrogen and can withstand very low temperatures, the inner lid body 20 may be made of other materials. The inner lid body 20 has a length of approximately 30 mm in an axial direction X of the cylindrical body 1, for example. The reason is that a length of approximately 30 mm allows the inner lid body 20 to have sufficient strength against liquid hydrogen. However, the length of the inner lid body 20 is not limited to approximately 30 mm, and is designed by suitably changing the length of the inner lid body 20 according to the size and the shape of the cylindrical body 1.

The inner lid body 20 includes a screw fastening portion 22 that causes the pipe 200 passing through the through hole 20a to be fixed by screw fastening. Specifically, a female screw is formed at the inner peripheral portion of the through hole 20a of the inner lid body 20, and a male screw that is fastened to the female screw of the inner lid body 20 is formed at the outer peripheral portion of the pipe 200. By causing the inner lid body 20 and the pipe 200 to be screw fastened to each other, it is possible to surely fix the pipe 200 against the internal pressure of hydrogen gas stored in the storage space 10 of the cylindrical body 1.

A sealing part 6 is provided between the inner peripheral portion of the inner lid body 20 and the outer peripheral portion of the pipe 200. This is to prevent a situation in which hydrogen gas stored in the storage space 10 of the cylindrical body 1 leaks to the outside through a space formed between the inner peripheral portion of the inner lid body 20 and the outer peripheral portion of the pipe 200. The sealing part 6 may be an O-ring, for example. However, the sealing part 6 is not limited to the O-ring. Provided that the sealing part 6 can prevent a situation in which hydrogen gas stored in the storage space 10 of the cylindrical body 1 leaks through a space formed between the inner peripheral portion of the inner lid body 20 and the outer peripheral portion of the pipe 200, the sealing part 6 may be formed by other members.

The inner lid body 20 is fitted in the opening end portion of the cylindrical body 1 with a gap S provided between the inner lid body 20 and the inner peripheral surface of the cylindrical body 1, the gap S communicating with the storage space 10 of the cylindrical body 1. The gap S is set to approximately 0.5 mm, for example, and is provided along the axial direction X of the cylindrical body 1. By causing the gap S to serve as a heat-insulating layer, it is possible to suppress a situation in which the temperature of the cylindrical body 1 is lowered by the inner lid body 20 having a low temperature due to the heat conduction from the pipe 200 through which liquid hydrogen at a very low temperature passes. Further, by providing the gap S, it is possible to fit the inner lid body 20 into the opening end portion of the cylindrical body 1.

The outer lid body 21 is provided to increase strength against the internal pressure of hydrogen gas in the cylindrical body 1. The reason is that there may be a case in which only the inner lid body 20 having a length of approximately 30 mm in the axial direction X cannot obtain sufficient strength against the internal pressure of hydrogen gas. The outer lid body 21 is made of low alloy steel, such as chromium-molybdenum steel, nickel-chromium-molybdenum steel, manganese-chromium steel, manganese steel, or boron-added steel. The low alloy steel is a lower cost than austenitic stainless steel, thus contributing to a reduction in manufacturing costs. The material of the outer lid body 21 is not limited to low alloy steel. Provided that the outer lid body 21 can increase strength against the internal pressure of hydrogen gas stored in the storage space 10 of the cylindrical body 1, the outer lid body 21 may be made of other materials.

A heat insulating part 7 is provided between the inner lid body 20 and the outer lid body 21. This is to prevent heat conduction from the inner lid body 20 to the outer lid body 21. A heat insulating part 8 is also provided between the outer lid body 21 and the pipe 200. This is to prevent heat conduction of the very low temperature of the pipe 200 to the outer lid body 21, liquid hydrogen at a very low temperature passing through the pipe 200. The reason is that when the temperature of the outer lid body 21, which is made of low alloy steel, is lowered due to the heat conduction of very low temperatures, there is a possibility of occurrence of a brittle fracture in the outer lid body 21. An example of the material of the heat insulating parts 7 and 8 is ceramic.

### (Sealing structure portion 3)

The sealing structure portion 3 is provided between the outer peripheral portion of the inner lid body 20 and the inner peripheral portion of the cylindrical body 1 to fill in at least a portion of the gap S. The sealing structure portion 3 is a sealing part made of a resin or metal, such as an O-ring, for example. By providing the sealing structure portion 3, it is possible to prevent a situation in which hydrogen gas stored in the storage space 10 of the cylindrical body 1 leaks to the outside through the gap S.

Filling in at least a portion of the gap S refers to filling in the entire gap S or filling in a portion of the gap S. It is preferable that, as shown in the drawing, a portion of the gap S be the end portion of the gap S at a position close to the storage space 10 of the cylindrical body 1. However, a portion of the gap S may be the end portion of the gap S at a position close to the outer lid body 21 or may be an intermediate portion of the gap S, for example. The sealing structure portion 3 is not limited to an O-ring. Provided that the sealing structure portion 3 can prevent hydrogen gas stored in the storage space 10 of the cylindrical body 1 from flowing into the gap S formed between the outer peripheral portion of the inner lid body 20 and the inner peripheral portion of the cylindrical body 1, the sealing structure portion 3 may be formed by other members. For example, the sealing structure portion 3 may be a member, such as a metal hollow O-ring that can provide sealing by a combination of metal and a resin. In the case in which an O-ring made of a resin is used, it is preferable to use an O-ring with a cold temperature limit of -30 degrees C or less, and it is more preferable to use an O-ring with a cold temperature limit of -50 degrees C or less.

### (Fixing part 4)

The fixing part 4 is provided at the opening end portion of the cylindrical body 1, and the outer peripheral surface of the fixing part 4 is screw fastened to the inner peripheral surface of the cylindrical body 1 to support and fix the lid body 2 from the outer side of the storage space 10. Specifically, the fixing part 4 is a gland nut having an outer peripheral surface thereof provided with a male screw portion that is to be screw fastened to the female screw portion 11 of the cylindrical body 1. When the fixing part 4 is screw fastened to the cylindrical body 1, the position of the fixing part 4 in the axial direction X is fixed. One end surface of the fixing part 4 abuts against the outer surface of the outer lid body 21 of the lid body 2 on which an axial force in the axial direction X acts due to high-pressure hydrogen gas stored in the storage space 10, so that the fixing part 4 can support the lid body 2. The pipe 200 passes through the hollow hole of the fixing part 4. The thickness of the fixing part 4 in the radial direction may be suitably determined. However, the fixing part 4 has a structure that supports pressure received by the inner lid body 20 and hence, when the fixing part 4 has an extremely small wall thickness in the radial direction, the fixing part 4 cannot sufficiently support the lid body 2. For this reason, the thickness of the fixing part 4 in the radial direction is preferably set to a wall thickness that can ensure an area capable of supporting 40% or more of the area of the inner lid body 20 that receives pressure, and is more preferably set to a wall thickness that can ensure an area capable of supporting 60% or more of the area of the inner lid body 20 that receives pressure. For example, assuming that the diameter of the inner lid body 20 is 300 mm, the area of the inner lid body 20 that receives pressure is 70650 mm². The area of the inner lid body 20 is calculated in a state that includes a portion in which the pipe 200 penetrates. However, in an actual calculation, it is desirable to perform the calculation in a state that excludes the portion in which the pipe 200 penetrates. In contrast, assuming that the wall thickness of the fixing part 4 is 50 mm, an area supported by the fixing part 4 is 39250 mm². In this case, the fixing part 4 can ensure an area capable of supporting 56% of the area of the inner lid body 20 that receives pressure.

### (Temperature detection unit 5)

The temperature detection unit 5 may be a thermocouple, for example, and detects the temperature of hydrogen gas stored in the storage space 10 of the cylindrical body 1, or the temperature of the inner lid body 20. In the pressure accumulator 100 according to Embodiment 1, the temperature of hydrogen gas stored in the cylindrical body 1 or the temperature of the inner lid body 20 is monitored by using the temperature detection unit 5. In the pressure accumulator 100, conditions of liquid hydrogen to be injected from the pipe 200 are determined based on the detected value from the temperature detection unit 5. The conditions of liquid hydrogen include flow rate, flow velocity, injection time, and the like. The pressure accumulator 100 includes a control unit, and is configured such that the control unit determines conditions of liquid hydrogen based on the detected value from the temperature detection unit 5 to adjust the flow rate and the like of liquefied hydrogen that passes through the pipe 200. Although it is desirable for the pressure accumulator 100 to be provided with the temperature detection unit 5, the temperature detection unit 5 is not always necessary to be provided, and may be omitted.

Fig. 2 is a cross-sectional view schematically showing the internal structure of one end of a modification of the pressure accumulator. In
the pressure accumulator 100 shown in Fig. 1, the inner lid body 20 includes the screw fastening portion 22 that causes the pipe 200 passing through the through hole 20a to be fixed by screw fastening. In contrast, in a pressure accumulator 100A shown in Fig. 2, the inner lid body 20 is configured to include a welding-fixing portion 23 that causes the pipe 200 passing through the through hole 20a to be fixed by welding. The welding-fixing portion 23 may be provided to the entire inner lid body 20 along the axial direction X, or may be provided to a portion of the inner lid body 20 along the axial direction X. In this case, a space formed between the inner peripheral portion of the inner lid body 20 and the outer peripheral portion of the pipe 200 is completely closed and hence, the sealing part 6 shown in Fig. 1 is unnecessary.

Adopting a configuration can be considered in which liquefied gas at a very low temperature is injected into the pressure accumulator 100 from the outside through the pipe 200, and is vaporized therein and is stored in the pressure accumulator 100, so that a vaporizer is not necessary. However, although the cylindrical body 1 can withstand only approximately -30 degrees C, for example, the temperature of liquid hydrogen is approximately -260 degrees C, for example. Accordingly, when liquid hydrogen is injected into the pressure accumulator 100, the temperature of the lid body 2 is lowered due to the heat conduction caused by the liquid hydrogen at a very low temperature that flows through the pipe 200, thus causing the temperature of the cylindrical body 1 to be lowered due to the heat conduction from the lid body 2 and hence, there is a possibility of occurrence of a brittle fracture in the cylindrical body 1.

In view of the above, as described above, the pressure accumulator 100 according to Embodiment 1 includes the cylindrical body 1 made of metal and the lid body 2, the cylindrical body 1 being configured to vaporize and store liquefied gas in the storage space 10 in the cylindrical body 1, the lid body 2 having the through holes 20a and 21a that allow the pipe 200 to penetrate therethrough, the lid body 2 fixing the pipe 200 passing through the through holes 20a and 21a, the lid body 2 closing the opening end portion of the cylindrical body 1 with the gap S formed between the lid body 2 and the inner peripheral surface of the cylindrical body 1, the gap S communicating with the storage space 10 of the cylindrical body 1. The pressure accumulator 100 according to Embodiment 1 also includes the sealing structure portion 3 and the fixing part 4, the sealing structure portion 3 being provided between the outer peripheral portion of the lid body 2 and the inner peripheral portion of the cylindrical body 1 to fill in at least a portion of the gap S, the fixing part 4 being provided at the opening end portion of the cylindrical body 1, the outer peripheral surface of the fixing part 4 being screw fastened to the inner peripheral surface of the cylindrical body 1 to support and fix the lid body 2 from the outer side of the lid body 2.

As described above, in the pressure accumulator 100 according to Embodiment 1, the gap S is provided between the outer peripheral portion of the lid body 2 and the inner peripheral portion of the cylindrical body 1, and at least a portion of the gap S is filled by the sealing structure portion 3 and hence, the gap S serves as a heat-insulating layer, thus suppressing heat conduction from the lid body 2 to the cylindrical body 1. That is, it is possible to suppress a situation in which the temperature of the cylindrical body 1 is lowered by the lid body 2 having a low temperature due to the heat conduction from the pipe 200 through which liquid hydrogen at a very low temperature passes and hence, a brittle fracture in the cylindrical body 1 can be suppressed. Accordingly, by causing liquefied gas at a very low temperature to be injected into the pressure accumulator 100 according to Embodiment 1 from the outside through the pipe 200, it is possible to vaporize and store the liquefied gas in the pressure accumulator 100.

The lid body 2 includes the screw fastening portion 22 that causes the pipe 200 passing through the through holes 20a and 21a to be fixed by screw fastening. The sealing part 6 that closes a space formed between the inner peripheral portion of the lid body 2 and the outer peripheral portion of the pipe 200 is provided between the inner peripheral portion of the lid body 2 and the outer peripheral portion of the pipe 200. Accordingly, it is possible to surely fix the pipe 200 against the internal pressure of hydrogen gas stored in the storage space 10 of the cylindrical body 1. It is also possible to prevent a situation in which hydrogen gas stored in the storage space 10 of the cylindrical body 1 leaks to the outside through a space formed between the inner peripheral portion of the inner lid body 20 and the outer peripheral portion of the pipe 200.

The lid body 2 includes the inner lid body 20 and the outer lid body 21, the inner lid body 20 being made of austenitic stainless steel, and being disposed at a position close to the storage space 10 of the cylindrical body 1, the outer lid body 21 being made of low alloy steel, and being disposed at a position close to the fixing part 4. Accordingly, although the inner lid body 20 faces the storage space 10 of the cylindrical body 1, and is always in a state of being exposed to liquid hydrogen at a very low temperature, the inner lid body 20 is made of austenitic stainless steel, thus being excellent in brittleness resistance against liquid hydrogen, and ensuring strength against very low temperatures. Strength against the internal pressure of hydrogen gas in the cylindrical body 1 can be increased by the outer lid body 21. Further, using low alloy steel that is a lower cost than austenitic stainless steel contributes to a reduction in manufacturing costs.

The heat insulating part 7 is provided between the inner lid body 20 and the outer lid body 21, and the heat insulating part 8 is provided between the outer lid body 21 and the pipe 200. Accordingly, heat conduction from the inner lid body 20 to the outer lid body 21 can be prevented, and it is also possible to prevent a situation in which the very low temperature of the pipe 200 through which liquid hydrogen at a very low temperature passes is conducted to the outer lid body 21 and hence, it is possible to prevent brittle damage of the outer lid body 21 caused by the lowering of the temperature.

Each of the pressure accumulators 100 and 100A according to Embodiment 1 includes the temperature detection unit 5 configured to detect the temperature of liquefied gas, which is vaporized, stored in the storage space 10 of the cylindrical body 1, or the temperature of the lid body 2. Accordingly, in the pressure accumulators 100 and 100A according to Embodiment 1, the temperature of hydrogen gas stored in the cylindrical body 1, or the temperature of the inner lid body 20 can be monitored by using the temperature detection unit 5, and it is possible to determine conditions of liquid hydrogen to be injected from the pipe 200 based on the detected value from the temperature detection unit 5.

### Embodiment 2.

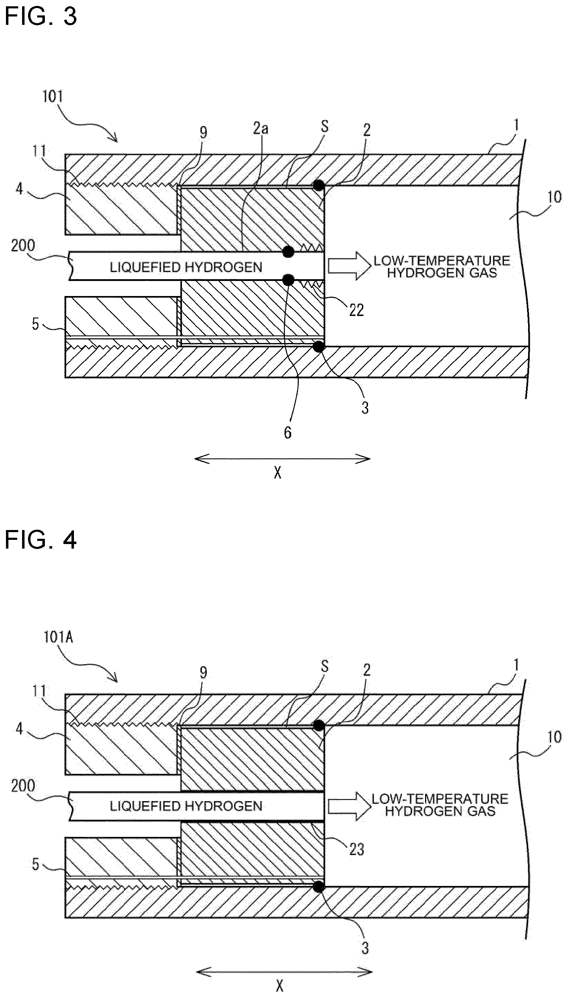

Next, a pressure accumulator 101 according to Embodiment 2 will be described with reference to Fig. 3. Fig. 3 is a cross-sectional view schematically showing the internal structure of one end of the pressure accumulator according to Embodiment 2. Constitutional elements identical to the corresponding constitutional elements of the pressure accumulator 100 described in Embodiment 1 are given the same reference symbols, and the description of such constitutional elements will be omitted when appropriate.

### (Lid body 2)

The pressure accumulator 101 according to Embodiment 2 differs from the pressure accumulator 100 described in the above-mentioned Embodiment 1 in the configuration of the lid body 2. A lid body 2 of the pressure accumulator 101 according to Embodiment 2 is made of only austenitic stainless steel.

The lid body 2 includes a screw fastening portion 22 that causes a pipe 200 passing through a through hole 2a to be fixed by screw fastening. Specifically, a female screw is formed at the inner peripheral portion of the through hole 2a of the lid body 2, and a male screw that is fastened to the screw of the lid body 2 is formed at the outer peripheral portion of the pipe 200. The lid body 2 includes the screw fastening portion 22 that causes the lid body 2 to be screw fastened to the pipe 200 and hence, it is possible to surely fix the pipe 200 against the internal pressure of hydrogen gas stored in the storage space 10 of the cylindrical body 1.

A sealing part 6 that closes a space formed between the inner peripheral portion of the lid body 2 and the outer peripheral portion of the pipe 200 is provided between the inner peripheral portion of the lid body 2 and the outer peripheral portion of the pipe 200. This is to prevent a situation in which hydrogen gas stored in the storage space 10 of the cylindrical body 1 leaks to the outside through a gap formed between the inner peripheral portion of the lid body 2 and the outer peripheral portion of the pipe 200. The sealing part 6 may be an O-ring, for example. However, the sealing part 6 is not limited to an O-ring. Provided that the sealing part 6 can prevent a situation in which hydrogen gas stored in the storage space 10 of the cylindrical body 1 leaks through a gap formed between the inner peripheral portion of the lid body 2 and the outer peripheral portion of the pipe 200, the sealing part 6 may be formed by other members.

A heat insulating part 9 is provided between the lid body 2 and the fixing part 4. This is to prevent heat conduction from the lid body 2 to the fixing part 4. The reason is that when the temperature of the fixing part 4 is lowered due to the heat conduction of very low temperatures, there is a possibility of occurrence of a brittle fracture in the fixing part 4. An example of the material of the heat insulating part 9 is ceramic. However, in the case in which the lid body 2 has a large length in the axial direction, so that heat conduction from the lid body 2 to the fixing part 4 will not occur, the heat insulating part 9 may be omitted.

Fig. 4 is a cross-sectional view schematically showing the internal structure of one end of a modification of the pressure accumulator. In the pressure accumulator 101 shown in Fig. 3, the lid body 2 includes the screw fastening portion 22 that causes the pipe 200 passing through the through hole 2a to be fixed by screw fastening. In contrast, in a pressure accumulator 101A shown in Fig. 4, the lid body 2 is configured to include a welding-fixing portion 23 that causes the pipe 200 passing through the through hole 2a to be fixed by welding. The welding-fixing portion 23 may be provided to the entire lid body 2 along the axial direction X, or may be provided to a portion of the lid body 2 along the axial direction X. In this case, a space formed between the inner peripheral portion of the lid body 2 and the outer peripheral portion of the pipe 200 is completely closed and hence, the sealing part 6 shown in Fig. 3 is unnecessary.

As described above, also in each of the pressure accumulators 101 and 101A according to Embodiment 2, the gap S is provided between the outer peripheral portion of the lid body 2 and the inner peripheral portion of the cylindrical body 1, and at least a portion of the gap S is filled by the sealing structure portion 3 and hence, the gap S serves as a heat-insulating layer, thus suppressing heat conduction from the lid body 2 to the cylindrical body 1. That is, it is possible to suppress a situation in which the temperature of the cylindrical body 1 is lowered by the lid body 2 having a low temperature due to the heat conduction from the pipe 200 through which liquid hydrogen at a very low temperature passes. Accordingly, by causing liquefied gas at a very low temperature to be injected into the pressure accumulator 101 according to Embodiment 2 from the outside through the pipe 200, it is possible to vaporize and store the liquefied gas in the pressure accumulator 101.

The lid body 2 is made of austenitic stainless steel. Accordingly, although the lid body 2 faces the storage space 10 of the cylindrical body 1, and is always in a state of being exposed to liquid hydrogen at a very low temperature, the lid body 2 is made of austenitic stainless steel, thus being excellent in brittleness resistance against liquid hydrogen, and ensuring strength against very low temperatures.

Each of the pressure accumulators 101 and 101A according to Embodiment 2 includes a heat insulating part 9 provided between the lid body 2 and the fixing part 4. Accordingly, heat conduction from the lid body 2 to the fixing part 4 can be prevented and hence, it is possible to prevent brittle damage of the fixing part 4 caused by the lowering of the temperature.

### Embodiment 3.

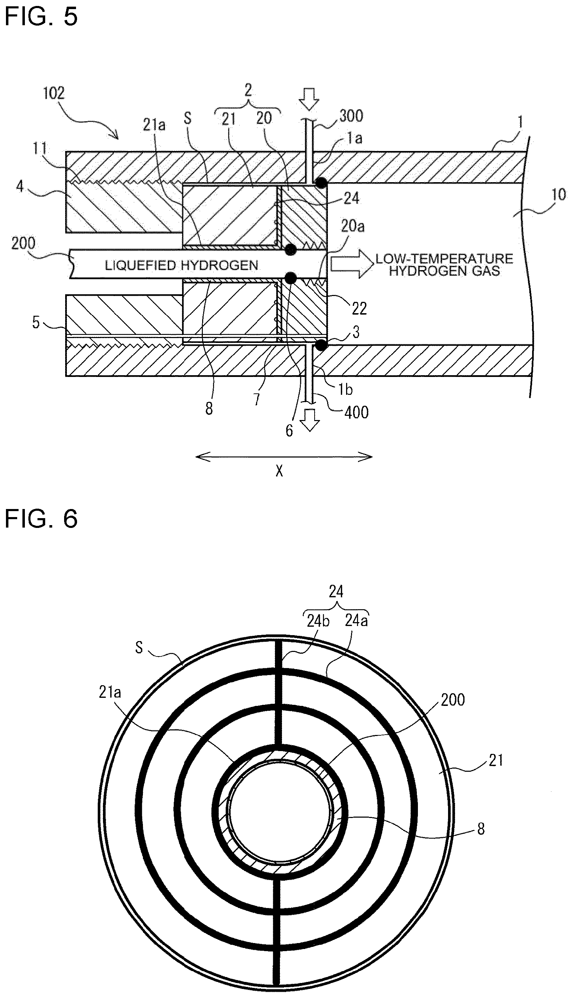

Next, a pressure accumulator 102 according to Embodiment 3 will be described with reference to Fig. 5 and Fig. 6. Fig. 5 is a cross-sectional view schematically showing the internal structure of one end of the pressure accumulator according to Embodiment 3. Fig. 6 is a diagram schematically illustrating the end surface of the outer lid body of the pressure accumulator according to Embodiment 3. Constitutional elements identical to the corresponding constitutional elements of the pressure accumulators 100, 101 described in Embodiments 1 and 2 are given the same reference symbols, and the description of such constitutional elements will be omitted when appropriate.

As shown in Fig. 5, a cylindrical body 1 of the pressure accumulator 102 according to Embodiment 3 has a first vent hole 1a and a second vent hole 1b, the first vent hole 1a allowing the outside of a cylindrical body 1 to communicate with a gap S to inject gas for heat exchange into the gap S from the outside of the cylindrical body 1, the second vent hole 1b allowing the outside of the cylindrical body 1 to communicate with the gap S to discharge the gas injected into the gap S through the first vent hole 1a to the outside of the cylindrical body 1. An injection pipe 300 through which gas is injected is connected to the first vent hole 1a. A discharge pipe 400 through which gas is discharged is connected to the second vent hole 1b. An example of the gas is inert air, and it is preferable to use dehumidified gas if possible. The gas may be an inert gas, or may be other gases. The gas is injected into the gap S by being pressurized by a power device, such as a compressor, circulates through the gap S, and is then discharged to the outside of the cylindrical body 1. In the pressure accumulator 102 according to Embodiment 3, by causing gas to flow into the gap S, the gas layer forms a heat-insulating layer, thus increasing an effect of suppressing heat conduction from the lid body 2 to the cylindrical body 1. In the pressure accumulator 102, even if a situation occurs in which hydrogen gas stored in the storage space 10 of the cylindrical body 1 leaks to a portion of the gap S, the leaked hydrogen gas can be discharged through the second vent hole 1b.

The lid body 2 includes an inner lid body 20 and an outer lid body 21, the inner lid body 20 being made of austenitic stainless steel, and being disposed at a position close to the storage space of the cylindrical body 1, the outer lid body 21 being made of low alloy steel, and being disposed at a position close to a fixing part. Of the end surface of the inner lid body 20 and the end surface of the outer lid body 21 that face each other, the end surface of the outer lid body 21 has a groove portion 24 that causes gas injected into the gap S from the outside of the cylindrical body 1 to circulate on the end surface of the outer lid body 21.

In Fig. 6, thick line portions show the groove portion 24. As shown in Fig. 6, the groove portion 24 includes a plurality of annular groove portions 24a and a straight-line-shaped coupling groove portion 24b that connects the plurality of annular groove portions 24a to each other. In the case of the example shown in the drawing, the plurality of annular groove portions 24a are formed by three circles that enclose the outer periphery of the through hole 21a. The three circles are formed such that large circles enclose the outer periphery of a small circle at substantially equal intervals. The coupling groove portion 24b has both end portions thereof communicating with the gap S, and is formed to extend in the radial direction in such a way as to connect the three circles to each other. Gas injected into the gap S enters the coupling groove portion 24b from one end portion of the coupling groove portion 24b and flows through the annular groove portions 24a and, thereafter, is discharged to the gap S from the other end of the coupling groove portion 24b. The gas injected into the gap S from the outside of the cylindrical body 1 circulates through the groove portion 24 as described above and hence, the gas layer forms a heat-insulating layer, thus increasing an effect of suppressing heat conduction from the inner lid body 20 to the outer lid body 21. When gas is dry air, even if the temperature of the gas is lowered at the time of performing heat exchange, dew condensation and freezing will not occur in the groove portion 24 of the lid body 21.

Although not shown in the drawing, of the end surface of the inner lid body 20 and the end surface of the outer lid body 21 that face each other, the end surface of the inner lid body 20 may have the groove portion 24. Further, of the end surface of the inner lid body 20 and the end surface of the outer lid body 21 that face each other, each of both end surfaces may have the groove portion 24.

The groove portion 24 is not limited to the shape shown in the drawing. For example, the annular groove portions 24a are not limited to a circular shape, and may have a rectangular shape or other shapes. The coupling groove portion 24b is not limited to a straight line shape, and may have a curved shape, a zigzag shape, or other shapes. Further, the groove portion 24 may have, for example, a lattice shape or a spiral shape, or may have other shapes. In short, provided that the groove portion 24 can cause gas injected into the gap S from the outside of the cylindrical body 1 to circulate through the end surface of the inner lid body 20 or the end surface of the outer lid body 21, the groove portion 24 may have any shape.

In the pressure accumulator 102, it is desirable that, of the end surface of the inner lid body 20 and the end surface of the outer lid body 21 that face each other, either one of the end surface of the inner lid body 20 or the end surface of the outer lid body 21 or both of the end surface of the inner lid body 20 and the end surface of the outer lid body 21 be provided with the groove portion 24. However, the groove portion 24 is not always necessary to be provided, and may be omitted.

As shown in Fig. 3 and Fig. 4, for example, the pressure accumulator 102 is also applicable to a configuration in which the lid body 2 is made of only austenitic stainless steel. However, in this case, the groove portion 24 shown in Fig. 5 and Fig. 6 is omitted.

The pressure accumulator 102 may be configured to perform a control of determining conditions of gas to be injected into the gap S based on the detected value from the temperature detection unit 5. Examples of conditions of gas include flow rate, flow velocity, injection time, and the like. The pressure accumulator 102 is not always necessary to determine the conditions of gas to be injected into the gap S based on the detected value from the temperature detection unit 5, and may determine the conditions of gas to be injected into the gap S by using other detection units.

The pressure accumulators (100, 100A, 101, 101A, 102) have been described based on Embodiments heretofore. However, the pressure accumulators (100, 100A, 101, 101A, 102) are not limited to the configurations of the above-described Embodiments. The configurations of the above-mentioned pressure accumulators (100, 100A, 101, 101A, 102) are merely examples, and may include other constitutional elements. In short, the pressure accumulators (100, 100A, 101, 101A, 102) include variations to which design changes or applications may be made.

### Reference Signs List

1: cylindrical body, 1a: first vent hole, 1b: second vent hole, 2: lid body, 2a: through hole, 3: sealing structure portion, 4: fixing part, 5: temperature detection unit, 6: sealing part, 7, 8, 9: heat insulating part, 10: storage space, 11: female screw portion, 20: inner lid body, 20a: through hole, 21: outer lid body, 21a: through hole, 22: screw fastening portion, 23: welding-fixing portion, 24: groove portion, 24a: annular groove portion, 24b: coupling groove portion, 100, 100A, 101, 101A, 102: pressure accumulator, 200: pipe, 300: injection pipe, 400: discharge pipe, S: gap.

## Claims

1. A pressure accumulator (100) configured to receive a liquefied gas at a very low temperature that is injected into the pressure accumulator (100) from an outside through a pipe (200), the pressure accumulator (100) comprising:
a cylindrical body (1) made of metal, the cylindrical body (1) defining a storage space (10) in which the liquefied gas becomes vaporized and the vaporized gas is stored;
a lid body (2) having a through hole (2a) that allows the pipe (200) to penetrate through the through hole (2a), the lid body (2) being configured to fix the pipe (200) passing through the through hole (2a), and being configured to close an opening end portion of the cylindrical body (1) with a gap (S) provided between the lid body (2) and an inner peripheral surface of the cylindrical body (1), the gap (S) communicating with the storage space (10) of the cylindrical body (1);
a sealing structure portion (3) provided between an outer peripheral portion of the lid body (2) and an inner peripheral portion of the cylindrical body (1), the sealing structure portion (3) being configured to fill in at least a portion of the gap (S); and
a fixing part (4) provided at the opening end portion of the cylindrical body (1), an outer peripheral surface of the fixing part (4) being screw fastened to the inner peripheral surface of the cylindrical body (1) to support and fix the lid body (2) from an outer side of the lid body (2),
**characterized in that** the lid body (2) includes a screw fastening portion (22) configured to cause the pipe (200) passing through the through hole (2a) to be fixed by screw fastening, and
a sealing part (6) is provided between an inner peripheral portion of the lid body (2) and an outer peripheral portion of the pipe (200) to close a space formed between the inner peripheral portion of the lid body (2) and the outer peripheral portion of the pipe (200).

2. The pressure accumulator (100) of claim 1, wherein the lid body (2) is made of austenitic stainless steel.

3. The pressure accumulator (100) of claim 1 or 2, further comprising a heat insulating part (9) provided between the lid body (2) and the fixing part (4).

4. The pressure accumulator (100) of claim 1, wherein
the lid body (2) includes
an inner lid body (20) made of austenitic stainless steel, the inner lid body (20) disposed at a position close to the storage space (10) of the cylindrical body (1), and the inner lid body (20) having a through hole (20a) configured to allow the pipe (200) to penetrate therethrough, and
an outer lid body (21) made of low alloy steel, the outer lid body (21) disposed at a position close to the fixing part (4), and the outer lid body (21) having a through hole (21a) configured to allow the pipe (200) to penetrate therethrough.

5. The pressure accumulator (100) of claim 4, wherein a heat insulating part (7) is provided between the inner lid body (20) and the outer lid body (21), and a heat insulating part (8) is provided on the surface of the through hole (21a) of the outer lid body (2).

6. The pressure accumulator (100) of any one of claims 1 to 5, further comprising a temperature detection unit (5) configured to detect a temperature of the vaporized gas stored in the storage space (10) of the cylindrical body (1), or a temperature of the lid body (2).

7. The pressure accumulator (100) of claim 1, wherein
the cylindrical body (1) includes
a first vent hole (1a) configured to cause an outside of the cylindrical body (1) to communicate with the gap (S) to inject a gas into the gap (S) from the outside of the cylindrical body (1), and
a second vent hole (1b) configured to cause the outside of the cylindrical body (1) to communicate with the gap (S) to discharge the gas injected into the gap (S) through the first vent hole (1a) to the outside of the cylindrical body (1).

8. The pressure accumulator (100) of claim 7, wherein the lid body (2) includes an inner lid body (20) and an outer lid body (21), the inner lid body (20) being made of austenitic stainless steel and being disposed at a position close to the storage space of the cylindrical body (1), the outer lid body (21) being made of low alloy steel and being disposed at a position close to the fixing part (4), and
of an end surface of the inner lid body (20) and an end surface of the outer lid body (21) that face each other, either one of the end surface of the inner lid body (20) or the end surface of the outer lid body (21) or both of the end surface of the inner lid body (20) and the end surface of the outer lid body (21) has a groove portion (24) through which the gas injected into the gap (S) circulates.

9. The pressure accumulator (100) of claim 8, wherein the groove portion (24) includes
a plurality of annular groove portions (24a), and
a coupling groove portion (24b) communicating with the gap (S) and configured to connect the plurality of annular groove portions (24a) to each other.

## Patentansprüche

1. Druckspeicher (100), der konfiguriert ist, um ein verflüssigtes Gas mit einer sehr niedrigen Temperatur aufzunehmen, das von einer Außenseite durch ein Rohr (200) in den Druckspeicher (100) eingespritzt wird, wobei der Druckspeicher (100) Folgendes umfasst:
einen zylindrischen Körper (1) aus Metall, wobei der zylindrische Körper (1) einen Speicherraum (10) definiert, in dem das verflüssigte Gas verdampft und das verdampfte Gas gespeichert wird;
einen Deckelkörper (2) mit einem Durchgangsloch (2a), das dem Rohr (200) erlaubt, durch das Durchgangsloch (2a) hindurchzudringen, wobei der Deckelkörper (2) konfiguriert ist, um das durch das Durchgangsloch (2a) hindurchgehende Rohr (200) zu fixieren, und konfiguriert ist, um einen Öffnungsendabschnitt des zylindrischen Körpers (1) mit einem Spalt (S) zu verschließen, der zwischen dem Deckelkörper (2) und einer Innenumfangsfläche des zylindrischen Körpers (1) bereitgestellt ist, wobei der Spalt (S) mit dem Speicherraum (10) des zylindrischen Körpers (1) in Verbindung steht;
einen Dichtungsstrukturabschnitt (3), der zwischen einem Außenumfangsabschnitt des Deckelkörpers (2) und einem Innenumfangsabschnitt des zylindrischen Körpers (1) bereitgestellt ist, wobei der Dichtungsstrukturabschnitt (3) konfiguriert ist, um mindestens einen Abschnitt des Spalts (S) auszufüllen; und
ein Fixierteil (4), das an dem Öffnungsendabschnitt des zylindrischen Körpers (1) bereitgestellt ist, wobei eine Außenumfangsfläche des Fixierteils (4) mit der Innenumfangsfläche des zylindrischen Körpers (1) verschraubt ist, um den Deckelkörper (2) von einer Außenseite des Deckelkörpers (2) zu stützen und zu fixieren,
**dadurch gekennzeichnet, dass** der Deckelkörper (2) einen Verschraubungsabschnitt (22) beinhaltet, der konfiguriert ist, um zu bewirken, dass das durch das Durchgangsloch (2a) hindurchgehende Rohr (200) durch Verschraubung fixiert wird, und
ein Dichtungsteil (6) zwischen einem Innenumfangsabschnitt des Deckelkörpers (2) und einem Außenumfangsabschnitt des Rohrs (200) bereitgestellt ist, um einen Raum zu verschließen, der zwischen dem Innenumfangsabschnitt des Deckelkörpers (2) und dem Außenumfangsabschnitt des Rohrs (200) gebildet ist.

2. Druckspeicher (100) nach Anspruch 1, wobei der Deckelkörper (2) aus austenitischem Edelstahl besteht.

3. Druckspeicher (100) nach Anspruch 1 oder 2, ferner umfassend ein wärmeisolierendes Teil (9), das zwischen dem Deckelkörper (2) und dem Fixierteil (4) bereitgestellt ist.

4. Druckspeicher (100) nach Anspruch 1, wobei
der Deckelkörper (2) Folgendes beinhaltet
einen Innendeckelkörper (20) aus austenitischem Edelstahl, wobei der Innendeckelkörper (20) an einer Position nahe dem Speicherraum (10) des zylindrischen Körpers (1) angeordnet ist, und der Innendeckelkörper (20) ein Durchgangsloch (20a) aufweist, das konfiguriert ist, um dem Rohr (200) zu erlauben, dort hindurchzudringen, und
einen Außendeckelkörper (21) aus niedriglegiertem Stahl, wobei der Außendeckelkörper (21) an einer Position nahe dem Fixierteil (4) angeordnet ist, und der Außendeckelkörper (21) ein Durchgangsloch (21a) aufweist, das konfiguriert ist, um dem Rohr (200) zu erlauben, dort hindurchzudringen.

5. Druckspeicher (100) nach Anspruch 4, wobei ein wärmeisolierendes Teil (7) zwischen dem Innendeckelkörper (20) und dem Außendeckelkörper (21) bereitgestellt ist, und ein wärmeisolierendes Teil (8) auf der Oberfläche des Durchgangslochs (21a) des Außendeckelkörpers (2) bereitgestellt ist.

6. Druckspeicher (100) nach einem der Ansprüche 1 bis 5, ferner umfassend eine Temperaturerkennungseinheit (5), die konfiguriert ist, um eine Temperatur des verdampften Gases, das in dem Speicherraum (10) des zylindrischen Körpers (1) gespeichert ist, oder eine Temperatur des Deckelkörpers (2) zu erkennen.

7. Druckspeicher (100) nach Anspruch 1, wobei
der zylindrische Körper (1) Folgendes beinhaltet
ein erstes Entlüftungsloch (1a), das konfiguriert ist, um zu bewirken, dass eine Außenseite des zylindrischen Körpers (1) mit dem Spalt (S) kommuniziert, um ein Gas von der Außenseite des zylindrischen Körpers (1) in den Spalt (S) einzuspritzen, und
ein zweites Entlüftungsloch (1b), das konfiguriert ist, um zu bewirken, dass die Außenseite des zylindrischen Körpers (1) mit dem Spalt (S) kommuniziert, um das durch das erste Entlüftungsloch (1a) in den Spalt (S) eingespritzte Gas an die Außenseite des zylindrischen Körpers (1) abzugeben.

8. Druckspeicher (100) nach Anspruch 7, wobei der Deckelkörper (2) einen Innendeckelkörper (20) und einen Außendeckelkörper (21) beinhaltet, wobei der Innendeckelkörper (20) aus austenitischem Edelstahl besteht und an einer Position nahe dem Speicherraum des zylindrischen Körpers (1) angeordnet ist, wobei der Außendeckelkörper (21) aus niedriglegiertem Stahl besteht und an einer Position nahe dem Fixierteil (4) angeordnet ist, und
von einer Endfläche des Innendeckelkörpers (20) und einer Endfläche des Außendeckelkörpers (21), die einander zugewandt sind, entweder eine von der Endfläche des Innendeckelkörpers (20) oder der Endfläche des Außendeckelkörpers (21) oder beide von der Endfläche des Innendeckelkörpers (20) und der Endfläche des Außendeckelkörpers (21) einen Nutabschnitt (24) aufweist, durch den das in den Spalt (S) eingespritzte Gas zirkuliert.

9. Druckspeicher (100) nach Anspruch 8, wobei der Nutabschnitt (24) Folgendes beinhaltet
eine Vielzahl von ringförmigen Nutabschnitten (24a), und
einen Kopplungsnutabschnitt (24b), der mit dem Spalt (S) kommuniziert und konfiguriert ist, um die Vielzahl von ringförmigen Nutabschnitten (24a) miteinander zu verbinden.

## Revendications

1. Accumulateur de pression (100) configuré pour recevoir un gaz liquéfié à une très basse température qui est injecté dans l'accumulateur de pression (100) depuis un extérieur par un tuyau (200), l'accumulateur de pression (100) comprenant :
un corps cylindrique (1) en métal, le corps cylindrique (1) définissant un espace de stockage (10) dans lequel le gaz liquéfié se vaporise et le gaz vaporisé est stocké ;
un corps de couvercle (2) présentant un trou traversant (2a) qui permet au tuyau (200) de pénétrer à travers le trou traversant (2a), le corps de couvercle (2) étant configuré pour fixer le tuyau (200) passant à travers le trou traversant (2a), et étant configuré pour fermer une partie d'extrémité d'ouverture du corps cylindrique (1) avec un espace (S) fourni entre le corps de couvercle (2) et une surface périphérique intérieure du corps cylindrique (1), l'espace (S) communiquant avec l'espace de stockage (10) du corps cylindrique (1) ;
une partie de structure d'étanchéité (3) fournie entre une partie périphérique extérieure du corps de couvercle (2) et une partie périphérique intérieure du corps cylindrique (1), la partie de structure d'étanchéité (3) étant configurée pour remplir au moins une partie de l'espace (S) ; et
une pièce de fixation (4) fournie au niveau de la partie d'extrémité d'ouverture du corps cylindrique (1), une surface périphérique extérieure de la pièce de fixation (4) étant fixée par vis à la surface périphérique intérieure du corps cylindrique (1) pour supporter et fixer le corps de couvercle (2) à partir d'un côté extérieur du corps de couvercle (2),
**caractérisé en ce que** le corps de couvercle (2) comporte une partie de fixation par vis (22) configurée pour amener la fixation par vis du tuyau (200) passant à travers le trou traversant (2a), et
une pièce d'étanchéité (6) est fournie entre une partie périphérique intérieure du corps de couvercle (2) et une partie périphérique extérieure du tuyau (200) pour fermer un espace formé entre la partie périphérique intérieure du corps de couvercle (2) et la partie périphérique extérieure du tuyau (200).

2. Accumulateur de pression (100) selon la revendication 1, dans lequel le corps de couvercle (2) est en acier inoxydable austénitique.

3. Accumulateur de pression (100) selon la revendication 1 ou la revendication 2, comprenant en outre une partie isolante thermique (9) fournie entre le corps de couvercle (2) et la pièce de fixation (4).

4. Accumulateur de pression (100) selon la revendication 1, dans lequel
le corps de couvercle (2) comporte
un corps de couvercle intérieur (20) en acier inoxydable austénitique, le corps de couvercle intérieur (20) étant disposé au niveau d'une position proche de l'espace de stockage (10) du corps cylindrique (1), et le corps de couvercle intérieur (20) présentant un trou traversant (20a) configuré pour permettre au tuyau (200) de pénétrer à travers celui-ci, et
un corps de couvercle extérieur (21) en acier faiblement allié, le corps de couvercle extérieur (21) étant disposé au niveau d'une position proche de la pièce de fixation (4), et le corps de couvercle extérieur (21) présentant un trou traversant (21a) configuré pour permettre au tuyau (200) de pénétrer à travers celui-ci.

5. Accumulateur de pression (100) selon la revendication 4, dans lequel une partie isolante thermique (7) est fournie entre le corps de couvercle intérieur (20) et le corps de couvercle extérieur (21), et une partie isolante thermique (8) est fournie sur la surface du trou traversant (21a) du corps de couvercle extérieur (2).

6. Accumulateur de pression (100) selon l'une quelconque des revendications 1 à 5, comprenant en outre une unité de détection de température (5) configurée pour détecter une température du gaz vaporisé stocké dans l'espace de stockage (10) du corps cylindrique (1), ou une température du corps de couvercle (2).

7. Accumulateur de pression (100) selon la revendication 1, dans lequel
le corps cylindrique (1) comporte
un premier orifice d'aération (1a) configuré pour amener un extérieur du corps cylindrique (1) à communiquer avec l'espace (S) pour injecter un gaz dans l'espace (S) depuis l'extérieur du corps cylindrique (1), et
un second orifice d'aération (1b) configuré pour amener l'extérieur du corps cylindrique (1) à communiquer avec l'espace (S) pour évacuer le gaz injecté dans l'espace (S) à travers le premier orifice d'aération (1a) vers l'extérieur du corps cylindrique (1).

8. Accumulateur de pression (100) selon la revendication 7, dans lequel le corps de couvercle (2) comporte un corps de couvercle intérieur (20) et un corps de couvercle extérieur (21), le corps de couvercle intérieur (20) étant en acier inoxydable austénitique et étant disposé au niveau d'une position proche de l'espace de stockage du corps cylindrique (1), le corps de couvercle extérieur (21) étant en acier faiblement allié et étant disposé au niveau d'une position proche de la pièce de fixation (4), et
d'une surface d'extrémité du corps de couvercle intérieur (20) et d'une surface d'extrémité du corps de couvercle extérieur (21) qui se font face, soit l'une de la surface d'extrémité du corps de couvercle intérieur (20) ou de la surface d'extrémité du corps de couvercle extérieur (21) soit les deux de la surface d'extrémité du corps de couvercle intérieur (20) et la surface d'extrémité du corps de couvercle extérieur (21) présente une partie rainurée (24) à travers laquelle circule le gaz injecté dans l'espace (S).

9. Accumulateur de pression (100) selon la revendication 8, dans lequel la partie rainurée (24) comporte
une pluralité de parties de rainure annulaire (24a), et
une partie de rainure d'accouplement (24b) communiquant avec l'espace (S) et configurée pour raccorder entre elles la pluralité de parties de rainure annulaire (24a).
